# EUROPEAN PATENT APPLICATION

(11) **EP 3 708 444 A1**
(43) Date of publication of application: **16.09.2020**
(21) Application number: 18875734.8
(22) Date of filing: 31.01.2018
(51) Int. Cl.: B60S 5/06, B60K 1/04

(54) **INSTALLATION STRUCTURE FOR BATTERY PACK, BATTERY PACK, AND AUTOMOBILE**

(30) Priority: 08.11.2017 CN 201721477198 U
(71) Applicant: NIO Nextev Limited, Central, Hong Kong (HK)
(72) Inventor: BENGTSSON, Jan, Central Hong Kong (HK); LI, Nan, Central Hong Kong (HK); TIAN, Xiaotao, Central Hong Kong (HK); YUAN, Chunping, Central Hong Kong (HK); DING, Xikun, Central Hong Kong (HK)
(74) Representative: Vossius & Partner Patentanwälte Rechtsanwälte mbB
(86) International application number: PCT/CN2018/074649
(87) International publication number: WO 2019/090989

(57) **Abstract**

Provided are a mounting structure for a battery pack, a battery pack and an automobile. The mounting structure (1) for the battery pack comprises a plug (21) disposed on the battery pack (2). The plug (21) is horizontally movable with respect to the battery pack (2). The bottom of the plug (21) is provided with a bevel (211). The bevel (211) is configured to cooperate with a mating bevel (31) provided on a vehicle, thereby mounting the battery pack (2) on the vehicle. The battery pack (2) is mounted on the vehicle by means of cooperation between the bevel (211) on the bottom of the plug (21) and the mating bevel (31) on the vehicle, and the battery pack (2) is conveniently loaded or unloaded by the horizontal movement of the plug (21) relative to the battery pack (2), thus facilitating rapid swapping of a used battery pack for a fresh battery pack.

## Description

### Technical Field

The invention relates to the field of automobiles, and in particular to a mounting structure for a battery pack, a battery pack, and an automobile with such a mounting structure for a battery pack.

### Background Art

Recently, batteries have been largely commercialized as an alternative vehicle power source. However, there are still many problems to be overcome when the batteries are used on a large scale. Perhaps the biggest challenge is charging. ICE vehicles are easily refuelled in gas stations in minutes. Electric vehicles require specialized charging equipment and a large amount of charging time (in hours). Electric automobiles charge more frequently than fuel automobiles, and a smaller range than an ICE vehicle makes the problem worse. It is not hard to park an electric automobile for a few hours or overnight in the company or at home, but parking a vehicle for hours during a long-distance trip is not practical.

Swappable battery packs are a promising technology for electric automobiles, which replaces the traditional long battery charge cycle and automatically and easily swaps a used battery on a vehicle for a fresh battery pack in a battery swap station, and the process lasts for a very short time.

Hitherto, there have been many methods for vehicles to retain and fix a battery pack, most of which use a bolt assembly to retain the battery pack, which requires an external drive mechanism and is time-consuming. In addition, a large number of sensors and electronics required for battery swap operations in battery swap stations make the operation unreliable and result in poor robustness.

### Summary of the Invention

The invention proposes a mounting structure for a battery pack, which can quickly swap a battery pack.

The mounting structure for a battery pack proposed according to one aspect of the invention comprises a plug disposed on a battery pack, the plug being horizontally movable with respect to the battery pack, the bottom of the plug being provided with a bevel configured to cooperate with a mating bevel provided on a vehicle, thereby mounting the battery pack on the vehicle.

According to one aspect of the invention, a battery pack is further proposed, wherein a plug is disposed on the battery pack, the plug is horizontally movable with respect to the battery pack, and the bottom of the plug is provided with a bevel configured to cooperate with a mating bevel provided on a vehicle. With the battery pack configured in such a manner, a quick battery pack swap can be realized.

In addition, another aspect of the invention provides an automobile with such a mounting structure for a battery pack. Since the automobile has the mounting structure for a battery pack according to the invention, it is possible for the automobile to have the advantages as described above.

The beneficial effects of the invention comprise: the battery pack is mounted on the vehicle by means of cooperation between the bevel on the bottom of the plug and the mating bevel on the vehicle, and the battery pack is conveniently loaded or unloaded by the horizontal movement of the plug relative to the battery pack, thus facilitating rapid swapping of a used battery pack for a fresh battery pack.

### Brief Description of the Drawings

The disclosure of the invention is now described with reference to accompanying drawings. It should be appreciated that the accompanying drawings are merely used for the purpose of illustration, and are not intended to limit the scope of protection of the invention. In the figures:
Fig. 1 schematically shows a mounting structure for a battery pack according to an embodiment of the invention, with the battery pack in an unmounted position; and
Fig. 2 schematically shows a mounting structure for a battery pack according to an embodiment of the invention, with the battery pack in a mounted position.

### List of reference numerals

1 Mounting structure for a battery pack
2 Battery pack
21 Plug
211 Bevel
32 First vertical face
24 Bottom member
3 Longitudinal beam
31 Mating bevel
212 Second vertical face

### Detailed Description of Embodiments

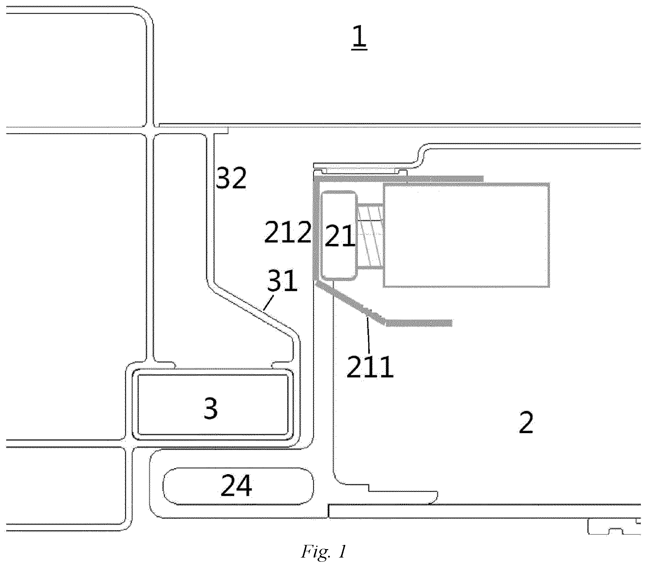

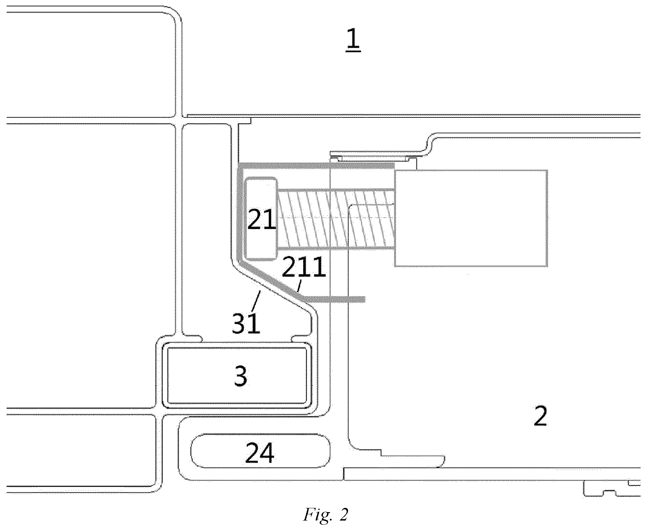

An embodiment according to the invention is shown with respect to Figs. 1 and 2. The mounting structure 1 for a battery pack comprises a plug 21 disposed on a battery pack 2. The plug 21 is horizontally movable with respect to the battery pack 2. The bottom of the plug 21 is provided with a bevel 211. The bevel 211 is configured to cooperate with a mating bevel 31 provided on a vehicle, thereby mounting the battery pack 2 on the vehicle. The bevel 211 can be used for guiding the plug 21 during installation of the battery pack 2. The battery pack 2 is mounted on the vehicle by cooperation of the bevel 211 on the bottom of the plug 21 and the mating bevel 31 on the vehicle, and the battery pack 2 is conveniently loaded or unloaded by the horizontal movement of the plug 21 relative to the battery pack 2, thus facilitating rapid swapping of a used battery back for a fresh battery pack. This swapping process can be performed in a battery swap station. The mounting structure for a battery pack according to the invention has a simple structure and few moving parts, contributing to high reliability and high robustness, and the low-wear operation thereof allows for a tremendous times of swaps.

According to an embodiment of the invention, between the plug 21 and the battery pack 2 are provided: an electromagnetic mechanism for moving the plug 21 close to the battery pack 2 when being energized, so as to bring the battery pack 2 into an unmounted position; and a spring for moving the plug 21 away from the battery pack 2 when the electromagnetic mechanism is de-energized, so as to bring the battery pack 2 into a mounted position. By providing the electromagnetic mechanism and the spring to control the plug 21 such that same extends out of/retracts into the battery pack 2, the battery pack 2 can be conveniently switched between the mounted position and the unmounted position. Of course, the electromagnetic mechanism may also be configured to move the plug 21 away from the battery pack 2 when being energized, and the spring may be configured to move the plug 21 close to the battery pack 2 when the electromagnetic mechanism is de-energized. Other actuators may also be provided for moving and/or maintaining the plug 21 in the mounted/unmounted position.

According to an embodiment of the invention, a first vertical face 32 is provided on a longitudinal beam 3 of the vehicle, a second vertical face 212 is provided on the plug 21, and in a mounted state of the battery pack 2, the first vertical face 212 and the second vertical face 32 bear against each other, which facilitates the positioning of the battery pack 2.

According to an embodiment of the invention, a plurality of plugs 21 are provided on the battery pack 2. The plugs 21 are respectively disposed on the opposite side faces of the battery pack 2 to facilitate the fixing of the battery pack 2.

According to an embodiment of the invention, the plug 21 is disposed above a centre of a side face of the battery pack 2, which facilitates the fixing of the battery pack 2.

According to an embodiment of the invention, two or three plugs 21 are provided on each side face of the battery pack 2, which facilitates the fixing of the battery pack 2. The positions and the number of the plugs 21 can be determined according to the mass of the battery pack 2.

According to an embodiment of the invention, the battery pack 2 has a bottom member 24, and an upper surface of the bottom member 24 bearing against a lower surface of a longitudinal beam 3 of the vehicle in a mounted state of the battery pack 2. In the mounted state, there is a clamping force between the bottom member 24 and the longitudinal beam 3 of the vehicle, so that the battery pack 2 is more firmly mounted and has a good dynamic performance.

According to an embodiment of the invention, the battery pack 2 is provided with a positioning pin, and the vehicle is provided with a corresponding guide hole for positioning the battery pack 2 in a horizontal plane.

Illustratively, the mounting process for the battery pack comprises the following steps: first moving the plug 21 close to the battery pack 2; then lifting the battery pack 2 upward until the top of the battery pack 2 comes into contact with the vehicle body or the upper surface of the bottom member 24 comes into contact with the lower surface of the longitudinal beam 3 of the vehicle; and after the battery pack 2 is accurately positioned in the vehicle, moving the plug 21 away from the battery pack 2 and then locking the battery pack 2 in the mounted position.

The invention further includes a battery pack 2. A plug 21 is disposed on the battery pack 2. The plug 21 is horizontally movable with respect to the battery pack 2, and the bottom of the plug 21 is provided with a bevel 211 configured to cooperate with a mating bevel 31 provided on a vehicle. With the battery pack configured in such a manner, a quick battery pack swap can be realized.

The invention further includes an automobile with a mounting structure for a battery pack according to any one of or more than one of the embodiments above, which therefore has the technical features and the technical effects corresponding to those described above, and no more detailed description is provided herein.

The technical scope of the invention is not merely limited to the above description. Those skilled in the art can make various changes and modifications to the above embodiments without departing from the technical idea of the invention, and these changes and modifications shall fall within the scope of protection of the invention.

## Claims

1. A mounting structure for a battery pack, **characterized in that** the mounting structure comprises a plug disposed on the battery pack, the plug is horizontally movable with respect to the battery pack, and the bottom of the plug is provided with a bevel configured to cooperate with a mating bevel provided on a vehicle, thereby mounting the battery pack on the vehicle.

2. The mounting structure for a battery pack according to claim 1, **characterized in that** between the plug and the battery pack are provided:
an electromagnetic mechanism for moving the plug close to the battery pack when being energized; and
a spring for moving the plug away from the battery pack when the electromagnetic mechanism is de-energized.

3. The mounting structure for a battery pack according to claim 1, **characterized in that** a first vertical face is provided on a longitudinal beam of the vehicle, a second vertical face is provided on the plug, and in a mounted state of the battery pack, the first vertical face and the second vertical face bear against each other.

4. The mounting structure for a battery pack according to claim 1, **characterized in that** a plurality of plugs are provided on the battery pack, and the plugs are respectively disposed on opposite side faces of the battery pack.

5. The mounting structure for a battery pack according to claim 1, **characterized in that** the plug is disposed above a centre of a side face of the battery pack.

6. The mounting structure for a battery pack according to claim 1, **characterized in that** two or three plugs are provided on each side face of the battery pack.

7. The mounting structure for a battery pack according to claim 1, **characterized in that** the battery pack has a bottom member, and an upper surface of the bottom member bears against a lower surface of a longitudinal beam of the vehicle in a mounted state of the battery pack.

8. The mounting structure for a battery pack according to claim 1, **characterized in that** a positioning pin is disposed on the battery pack for positioning the battery pack in a horizontal plane.

9. A battery pack, **characterized in that** a plug disposed on the battery pack, the plug is horizontally movable with respect to the battery pack, and the bottom of the plug is provided with a bevel configured to cooperate with a mating bevel provided on a vehicle.

10. An automobile, **characterized by** comprising a mounting structure for a battery pack according to any one of claims 1 to 8.
